## Europäisches Patentamt

## European Patent Office

## Office européen des brevets

(11) Publication number: **0 134 361**
**B1**

(12) **EUROPEAN PATENT SPECIFICATION**

(45) Date of publication of patent specification: 02.12.87

(21) Application number: 83305328.3

(22) Date of filing: 13.09.83

(51) Int. Cl.⁴: **B 08 B 15/02,** B 07 B 7/083, B 01 D 45/14, B 01 D 21/26, F 04 D 1/14, B 03 B 11/00

(54) Apparatus and method for withdrawing fluid from a zone.

(43) Date of publication of application:
20.03.85 Bulletin 85/12

(45) Publication of the grant of the patent:
02.12.87 Bulletin 87/49

(84) Designated Contracting States:
AT BE CH DE FR IT LI LU NL SE

(56) References cited:
FR-A-1 108 451
FR-A-2 267 463
FR-A-2 442 982
GB-A- 852 765
GB-A-1 069 615

PATENTS ABSTRACTS OF JAPAN, vol. 1, no. 154, 9th December 1977, page 5705 M 77

(73) Proprietor: HATCH ASSOCIATES LTD.,
21 St. Clair Avenue East
Toronto Ontario M4T 1L9 (CA)

(72) Inventor: Twigge-Molecey, Christopher F.M.
291, Heath Street East
Toronto Ontario M4T 1T3 (CA)
Inventor: Aydin, Etem Mahir
716 The West Mall Apartment 1409
Etobicoke Ontario (CA)

(74) Representative: Newby, John Ross et al
J.Y. & G.W. Johnson Furnival House 14/18 High Holborn
London WC1V 6DE (GB)

Courier Press, Leamington Spa, England.

## Description

This invention relates in general terms to methods and apparatus for selectively withdrawing fluid from a zone in a body of fluid adjacent a structure bounding that body of fluid but remote from the means producing the withdrawal.

There are a number of applications in which such a means would be useful. For example, such a means located above a work station could be arranged to withdraw fumes or dust-laden air from a limited zone in the work station, without the use of cumbersome ducting or massive hoods, and with a lesser rate of air flow than is usually associated with conventional forms of ventilation for use in such situations. In another example, it may be desired to classify fluid entrained material moving over a surface such as the bottom of a settling tank so that lighter or finer fractions of the entrained material may be extracted from the top of the tank.

GB—A—852765 describes apparatus for removing lint and/or dust from machine and floor surfaces in a manufacturing plant in which a centrifugal blower is employed to create suction in at least one flexible conduit which extends down from the blower to the surfaces from which the lint and/or dust is to be removed, the air flowing up the at least one conduit and entraining the material to be removed. This document discloses the pre-characterising features of the present independent claims.

FR—A—2442982 describes a rotary centrifugal pump for lifting liquid from a body of liquid in which a vortex is created in the liquid within a rotating frusto-conical member provided with helicoidal blades along the sides of the member and a pair of paddles adjacent to the lower end of the member.

According to the invention, apparatus for withdrawing fluid through a flexible conduit from a limited zone remote from the apparatus and adjacent a structure bounding an otherwise substantially laterally unconfined body of the fluid, comprises a tubular member connected at one end to the flexible conduit and connected at its other end to means to draw fluid through the tubular member and is characterised in that the tubular member has an open end directed towards said zone, rotary means forming or inwardly adjacent an inner surface of the open end of the tubular member and adapted to apply substantial viscous drag to fluid therein whereby with the means to withdraw fluid from the other end of said tubular member a vortex is set up in said fluid extending from said limited zone to said open end of the tubular member, which vortex forms the flexible conduit.

Where the apparatus is intended to extract particulate material from the zone, the rate of rotation of the tubular member should be such that the rate of flow in the vortex is sufficient to establish and maintain entrainment of the particulate material. Effectively, the apparatus sets up an artificial tornado in the fluid which ducts fluid, together with any entrained particulate material, from the zone to the tubular member, whence the withdrawn fluid may be removed for further treatment if necessary. By the term "substantially laterally unconfined" as applied to the body of fluid we mean that any structure bounding the fluid other than that adjacent the zone is sufficiently remote from the vortex to have no substantial effect on movement of fluid in its vicinity. This is in contrast for example to the movement of fluid in a cyclone separator in which a vortex is set up in a confined space, the walls of which have a major influence upon the configuration of the vortex. The major attributes of the apparatus of the present invention are that it enables the control of fluid flow in a remote zone upstream of the apparatus without the confining structure which would normally be associated with such control.

In a preferred form of the invention, the means defining the tubular member is a rotatable structure with an outer wall defining a cylinder open at one end and closed at the other end, and ribs extending radially from the inside surface of said cylinder adjacent said open end, the outer wall having radial openings in the cylinder adjacent the closed end whereby to provide centrifugal pump means to withdraw fluid from said other end of the cylinder.

The invention also extends to a method for remotely withdrawing fluid through a flexible conduit from a limited zone adjacent a structure bounding a substantially laterally unconfined body of the fluid, by drawing fluid through a flexible conduit connected to the open end of a tubular member while fluid is withdrawn from the other end of the tubular member, characterised in that vicous shear forces are applied to part of the fluid contained within and adjacent the inner surface of the tubular member which has its open end directed towards the zone and which by virtue of the withdrawal of fluid from the other end of the tubular member sets up a vortex in said fluid extending from said zone to the open end of the tubular member, which vortex forms said flexible conduit.

Further features of the invention will become apparent from the following description of two exemplary embodiments thereof with reference to the accompanying drawings, in which:

Figure 1 is a vertical section through apparatus in accordance with the invention, illustrating its use to withdraw fumes from the vicinity of the top of a crucible;

Figure 2 is a horizontal section on the line A—A in Figure 1;

Figure 3 is a horizontal section on the line B—B in Figure 1;

Figure 4 is a perspective view of the rotating parts of the apparatus of Figure 1;

Figure 5 is a vertical section through a classifying apparatus, on the line A—A in Figure 6; and

Figure 6 is a plan view of the apparatus of Figure 5.

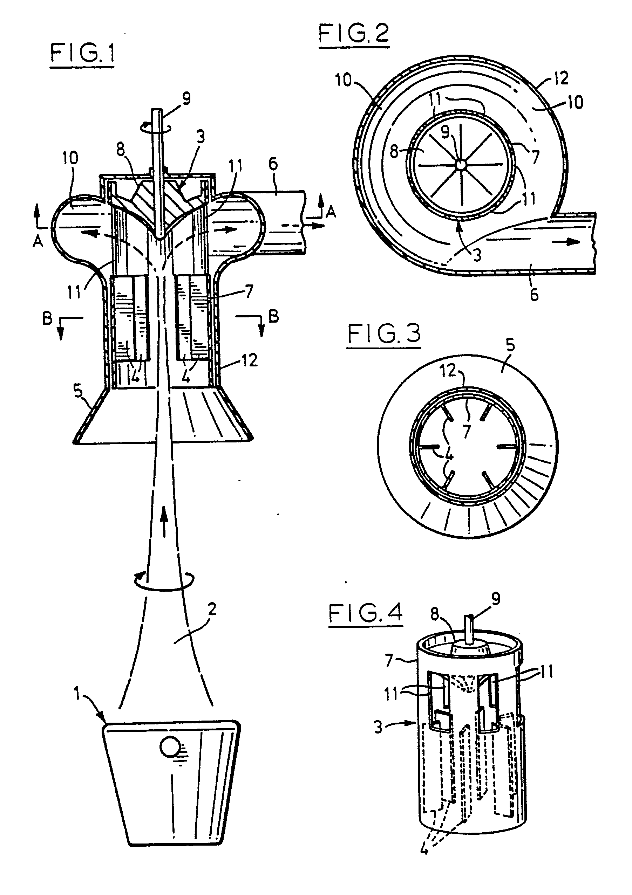

Referring to Figures 1 to 4, the apparatus shown is intended for removing fumes emitted by a localized fume source such as a crucible 1. It will of course be understood that a crucible is shown merely as an example of a possible fume source. In order to control fumes from such sources, a common expedient has been to provide a large and cumbersome hood from which air is extracted at a high rate in the hope of capturing most of the fumes. Such a system is of limited effectiveness, and is expensive both in the power required to move large volumes of air and the facilities required to clean the air. The problem is even more severe when, as is often the case, the crucible must be moved around within a building.

The apparatus of the invention operates by generating an artificial vortex with the crucible 1 at its eye, with the result that fumes 2 from the crucible are drawn up within the eye into the apparatus. The apparatus comprises a rotor 3 having an outside wall defining a cylinder 7 with an open bottom end and a closed top end in the form of a hub 8 attached to a vertical shaft 9 coaxial with the cylinder. The rotor is housed inside a generally cylindrical casing 12, which may be flared at its lower end to form a small hood 5. The casing has an annular chamber 10 at its top end connected to a tangential exhaust passage 6. Within the open end of the cylinder are a number of inwardly extending vertical ribs 4, whilst between the ribs and the hub a number of radial apartures 11 in the cylinder open into the chamber 10. The hub 8 may be formed with radial ribs on its lower surface which is preferably peaked in the centre.

When the rotor 3 is rotated, the ribs 4 increase the viscous shear applied to the air inside the rotor by the inside surface of the cylinder 7, whilst centrifugal force tends to expel the air through the apertures 11 into the chamber 10 and hence the exhaust passage 6, this action being assisted by the ribs on the hub, if present. This combined action tends to produce a vortex upstream (relative to the direction of air movement through the apparatus) of the open end of the cylinder, which will be directed approximately in the direction in which the cylinder is pointed, in the present case downwardly towards the crucible. If the crucible is moveable along a preselected path, then provision may be made for the apparatus to be movable so as to track the crucible along its path. In many cases it will not matter if the impingement zone of the vortex is not centrally on the crucible or not entirely stable provided that the desired localized ventilation is achieved and the fumes are entrained. The apparatus is equally useful in conjunction with equipment that generates other forms of contaminants, provided that the speed of the air in the vortex is sufficient to entrain any particulate matter and maintain it entrained until it enters the cylinder 7.

Although it is convenient to use a common rotor to generate both the rotational and axial components of motion of the vortex, as has been described, this is not essential, and means other than the centrifugal arrangement described may be used to withdraw air from the cylinder such as a fan in the exhaust passage or any other means to create a pressure differential that will tend to withdraw air from the cylinder 7.

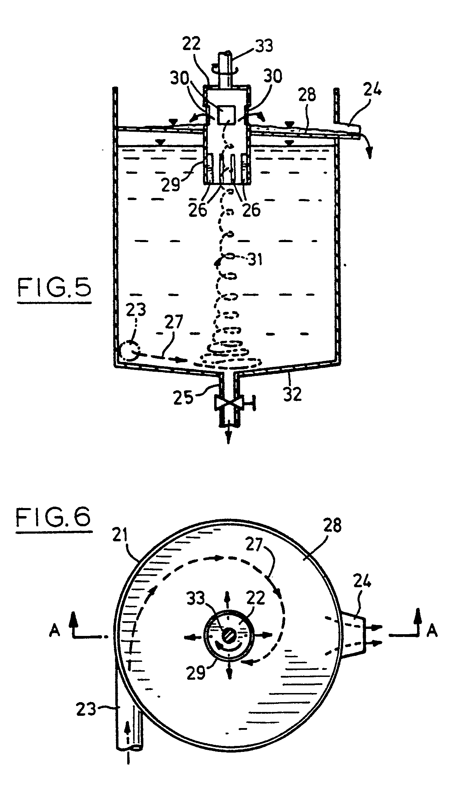

The apparatus of the invention is not confined to use in air or other gases but may be used in liquids. The embodiment of Figures 5 and 6 shows apparatus intended for use in classifying particulate material suspended in water. The suspension to be classified is discharged tangentially through an inlet 23 at the bottom of a large, typically cylindrical, settling tank 21 so that it tends to move along an extended path 27 across the bottom surface 32 of the tank towards a drain 25 in the centre of the bottom of the tank whilst the particulate material settles out. A rotor 22 somewhat similar to the rotor 3 is arranged at the top of the tank with the lower portion of its cylinder 29 projecting through a sloping plate 28 into the water in the tank so that shear inducing ribs 26 on the inside of the cylinder are submerged. Upon rotation of the rotor 22 by means of a shaft 33, the ribs 26 engender rotation of the water within the cylinder, which climbs the cylinder inner wall under the influence of centrifugal force and escapes through apertures 30 onto the upper surface of the plate 28, from which it drains through a discharge orifice 24. The withdrawal of water through the apertures 30 combined with the viscous shear set up by the ribs 26 and the cylinder 29 generate a vortex 31 in the water extending towards the bottom surface of the tank adjacent the drain 25. By suitable control of the velocity of the water in the vortex, the suspended particles can be classified so that the coarser particles are not re-entrained, and can be discharged with part of the water through the drain 25, whilst the finer particles are re-entrained into the vortex and pass upwards, through the rotor and out with part of the water through the discharge orifice 24. A further portion of the water can be discharged if desired through a weir or weirs at the side of the tank.

In each of the above two exemplary embodiments, the body of fluid being treated is of sufficient lateral extent relative to the vortex that any bounding walls (the walls of the building in the first embodiment, the walls of the tank in the second embodiment) are sufficiently remote to have no substantial effect on the formation of the vortex, the apparatus being operated to provide entrainment of fluid at a remote point upstream of the apparatus relative to the direction of movement of the fluid through it.

It is in the nature of tornado or comparable vortex that suspended material tends to concentrate on the inside of the vortex. This phenomenon may be utilized to achieve preliminary separation of suspended material from the suspending liquid or gaseous medium by extracting separate fractions of the suspending medium from the axial and peripheral regions of the vortex. If the shaft 9 shown in Figure 1 is made hollow, and air is separately exhausted through the passage so formed, then most of the suspended material passing up the core of the vortex will pass through this passage whilst the bulk of the air is exhausted through the slots 11, the chamber 10 and the passage 6. This pre-separation greatly facilitates subsequent treatment of the two air flows in order to assist in the separation of the entrained material.

## Claims

1. Apparatus for withdrawing fluid through a flexible conduit from a limited zone remote from the apparatus and adjacent a structure bounding an otherwise substantially laterally unconfined body of the fluid, comprises a tubular member (12, 29) connected at one end to the flexible conduit and connected at its other end to means (11, 10, 6; 30, 28, 24) to draw fluid through the tubular member, characterised in that the tubular member (12, 29) has an open end directed towards said zone, rotary means (7, 29) forming or inwardly adjacent an inner surface of the open end of the tubular member and adapted to apply substantial viscous drag to fluid therein, whereby with the means (11, 10, 6; 30, 28, 24) to withdraw fluid from the other end of said tubular member, a vortex (2, 31) is set up in said fluid extending from said limited zone to said open end of the tubular member, which vortex (2, 31) forms said flexible conduit.

2. Apparatus according to claim 1, characterised in that the means defining the tubular member is a rotatable structure (7, 29) with an outer wall defining a cylinder open at one end, and ribs (4, 26) extending radially from the inside surface of said cylinder adjacent said open end.

3. Apparatus according to claim 2, characterised in that the cylinder (7, 29) is closed at its other end and the outer wall has radial openings (11, 30) in the cylinder adjacent to the closed end whereby to provide centrifugal pump means to withdraw fluid from said other end of the cylinder.

4. Apparatus according to claim 1, 2 or 3, characterised in that the fluid is air and the bounding structure is associated with a source of airborne contaminants.

5. Apparatus according to claim 1, 2 or 3, characterised in that the fluid is a liquid, and the bounding structure is the bottom of a tank (21).

6. Apparatus according to any preceding claim, characterised in that the means to withdraw fluid from the other end of the tubular member comprises separate means (9, 10) for withdrawing fluid from axial and peripheral portions of the vortex.

7. A method for remotely withdrawing fluid through a flexible conduit from a limited zone adjacent a structure bounding a substantially laterally unconfined body of the fluid, by drawing fluid through a flexible conduit connected to the open end of a tubular member (12, 29) while fluid is withdrawn from the other end of the tubular member, characterised in that viscous shear forces are applied to part of the fluid contained within and adjacent the inner surface of the tubular member (7, 29) which has its open end directed towards the zone and which by virtue of the withdrawal of fluid from the other end of the tubular member sets up a vortex (2, 31) in said fluid extending from said zone to the open end of the tubular member, which vortex (2, 31) forms said flexible conduit.

8. A method according to claim 7, characterised in that the tubular member (7, 29) is rotated and the fluid is withdrawn from the tubular member by expelling it centrifugally through apertures (11, 30) in the wall of the tubular member at its other end.

9. A method according to claim 7 or 8, characterised in that the fluid is air and the bounding structure is associated with a source of airborne contaminants or the fluid is a liquid, and the bounding structure is the bottom of a tank (21).

10. A method according to claim 7, 8 or 9, characterised in that separate streams of fluid are withdrawn from the axial and peripheral regions of the tubular members (7, 29).

## Patentansprüche

1. Vorrichtung zur Entnahme von Fluid über einen beweglichen Führungskanal aus einem beschränkten Bereich, der entfernt von der Vorrichtung und nahe einer Konstruktion liegt, die eine sonst im wesentlichen seitlich unbegrenzte Fluidmasse umgibt, bestehend aus einem röhrenförmigen Glied (12, 29), das an einem Ende mit dem beweglichen Führungskanal verbunden ist und an sienem anderen Ende mit Mitteln (11, 10, 6; 30, 28, 24) zum Abziehen von Flüssigkeit durch das röhrenförmige Glied verbunden ist, dadurch gekennzeichnet, dass das röhrenförmige Glied (12, 29) ein offenes, hin zum besagten Bereich gerichtetes Ende besitzt, sowie Drehmittel (7, 29), welche die Innenfläche des offenen Endes des röhrenförmigen Glieds bilden oder dieser innen anliegen und so ausgerichtet sind, dass sie auf das darin befindliche Fluid einen erheblichen Viskositätswiderstand ausüben, wodurch mit Hilfe der Mittel (11, 10, 6; 30, 28, 24) zur Fluidentnahme vom anderen Ende jenes röhrenförmigen Glieds ein Wirbel (2, 31) in diesem Fluid erzeugt wird, der von dem besagten beschränkten Bereich bis zum offenen Ende des röhrenförmigen Glieds reicht, wobei dieser Wirbel (2, 31) den beweglichen Führenskanal bildet.

2. Vorrichtung nach Anspruch 1, dadurch gekennzeichnet, dass es sich bei den das röhrenförmige Glied begrenzenden Mitteln um eine drehbare Konstruktion (7, 29) mit einer Aussenwand, die einen an einem Ende offenen Zylinder begrenzt, sowie Rippen (4, 26) handelt, welche nahe diesem offenen Ende radial von der Innenfläche des Zylinders ausgehen.

3. Vorrichtung nach Anspruch 2, dadurch gekennzeichnet, dass der Zylinder (7, 29) an seinem anderen Ende geschlossen ist, und die Aussenwand nahe dem geschlossenen Ende radiale Öffnungen (11, 30) im Zylinder besitzt, wodurch zentrifugale Pumpmittel zur Entnahme von Fluide über das besagte andere Zylinderende geschaffen werden.

4. Vorrichtung nach Anspruch 1, 2 oder 3, dadurch gekennzeichnet, dass das Fluid aus Luft besteht, und die begrenzende Konstruktion mit einer Quelle von in der Luft schwebenden Verunreinigungen in Verbindung steht.

5. Vorrichtung nach Anspruch 1, 2 oder 3, dadurch gekennzeichnet, dass das Fluid aus Flüssigkeit besteht, und die begrenzende Konstruktion der Boden eines Beckens (21) ist.

6. Vorrichtung nach einem der vorhergehenden Ansprüche, dadurch gekennzeichnet, dass die Mittel zur Fluidentnahme vom anderen Ende des röhrenförmigen Glieds separate Mittel (9, 10) zur Fluidentnahme enthalten aus Axial- und Randgebieten des Wirbels.

7. Verfahren zur Fernentnahme von Fluid durch einen beweglichen Führungskanal aus einem beschränkten Bereich, der nahe einer Konstruktion liegt, die eine sonst im wesentlichen seitlich unbegrenzte Fluidmasse umgibt, wobei die Fluidentnahme über einen beweglichen, mit dem offenen Ende des röhrenförmigen Glieds (12, 29) verbundenen Führungskanal erfolgt, während Fluid vom anderen Ende des röhrenförmigen Glieds abgezogen wird, dadurch gekennzeichnet, dass viskose Scherkräfte auf den Fluidteil wirken, der sich innerhalb und nahe der Innenfläche des röhrenförmigen Glieds (7, 29) befindet, dessen offenes Ende hin zu dem Bereich gerichtet ist, und das aufgrund der FLuidentnahme am anderen Ende des röhrenförmigen Glieds in diesem Fluid einen Wirbel (2, 31) erzeugt, der von besagtem Bereich bis zum offenen Ende des röhrenförmigen Glieds reicht, wobei dieser Wirbel (2, 31) den besagten beweglichen Führungskanal bildet.

8. Verfahren nach Anspruch 7, dadurch gekennzeichnet, dass das röhrenförmige Glied (7, 29) rotiert wird, und das Fluid aus dem röhrenförmigen Glied dadurch entnommen wird, dass es zentrifugal durch Wandöffnungen (11, 30) am anderen Ende des röhrenförmigen Glieds herausgetrieben wird.

9. Verfahren nach Anspruch 7 oder 8, dadurch gekennzeichnet, dass das Fluid aus Luft besteht und die begrenzende Konstruktion mit einer Quelle von in der Luft schwebenden Verunreinigungen in Verbindung steht, oder das Fluid aus Flüssigkeit besteht, und die begrenzende Konstruktion der Boden eines Beckens (21) ist.

10. Verfahren nach Anspruch 7, 8 oder 9, dadurch gekennzeichnet, dass separate Fluidströmungen aus den Axial- und Randbereichen des röhrenförmigen Glieds (7, 29) entnommen werden.

**Revendications**

1. Appareil pour extraire un fluide par un conduit flexible hors d'une zone limitée éloignée de l'appareil et adjacente à une structure limitant un volume de fluide qui autrement n'est substantiellement pas confiné latéralement, comprenant un corps tubulaire (12, 29) raccordé à une extrémité au conduit flexible et raccordé à son autre extrémité à des moyens (11, 10, 6; 30, 28, 24) pour aspirer le fluide à travers le corps tubulaire (12, 29), caractérisé en ce que le corps tubulaire (12, 29) présente une extrémité ouverte dirigée vers ladite zone, des moyens rotatifs (7, 29) formant ou intérieurement adjacents à une surface intérieure de l'extrémité ouverte du corps tubulaire et aptes à appliquer une substantielle traînée visqueuse au fluide présent à l'intérieur de celui-ci, et par lesquels, avec les moyens (11, 10, 6; 30, 28, 24) pour extraire le fluide de l'autre extrémité dudit corps tubulaire, il s'établit dans ledit fluide un vortex (2, 31) s'étendant depuis ladite zone limitée jusqu'à la dite extrémité ouverte du corps tubulaire, lequel vortex (2, 31) forme ledit conduit flexible.

2. Appareil suivant la revendication 1, caractérisé en ce que les moyens définissant le corps tubulaire sont constitués par une structure tournante (7, 29) avec une paroi extérieure définissant un cylindre ouvert à une extrémité, et des ailettes (4, 26) s'étendant radialement à partir de la surface interne dudit cylindre au voisinage de ladite extrémité ouverte.

3. Appareil suivant la revendication 2, caractérisé en ce que le cylindre (7, 29) est fermé à son autre extrémité et en ce que la paroi extérieure comporte des ouvertures radiales (11, 30) dans le cylindre au voisinage de l'extrémité fermée, pour constituer ainsi des moyens de pompe centrifuge pour extraire le fluide de ladite autre extrémité du cylindre.

4. Appareil suivant la revendication 1, 2 ou 3, caractérisé en ce que le fluide est l'air et en ce que la structure de limitation est associée à une source de polluants atmosphériques.

5. Appareil suivant la revendication 1, 2 ou 3, caractérisé en ce que le fluide est un liquide et en ce que la structure de limitation est le fond d'une cuve (21).

6. Appareil suivant l'une quelconque des revendications précédentes, caractérisé en ce que les moyens pour extraire le fluide de l'autre extrémité du corps tubulaire comprennent des moyens séparés (9, 10) pour extraire du fluide des régions axiale et périphérique du vortex.

7. Procédé pour extraire à distance du fluide à travers un conduit flexible hors d'une zone limitée adjacente à une structure limitant un volume de fluide qui autrement n'est substantiellement pas confiné latéralement, en extrayant le fluide à travers un conduit flexible raccordé à l'extrémité ouverte d'un corps tubulaire (12, 29) tandis que le fluide est extrait par l'autre extrémité du corps tubulaire, caractérisé en ce que des forces de cisaillement visqueux sont appliquées à une partie du fluide contenu à l'intérieur et au voisinage de la surface intérieure du corps tubulaire (7, 29) qui a son extrémité ouverte dirigée vers la zone et qui, grâce à l'extraction du fluide par l'autre extrémité du corps tubulaire, établit dans ledit fluide un vortex (2, 31) qui s'étend depuis ladite zone jusqu'à l'extrémité ouverte du corps tubulaire, lequel vortex (2, 31) forme ledit conduit flexible.

8. Procédé suivant la revendication 7, caractérisé en ce que le corps tubulaire (7, 29) est mis en rotation et en ce que le fluide est extrait du corps tubulaire en l'expulsant par centrifugation à travers des ouvertures (11, 30) ménagées dans la paroi du corps tubulaire à son autre extrémité.

9. Procédé suivant la revendication 7 ou 8, caractérisé en ce que le fluide est l'air et en ce que la structure de limitation est associée à une source de polluants atmosphériques ou en ce que le fluide est un liquide et en ce que la structure de limitation est le fond d'une cuve (21).

10. Procédé suivant la revendication 7, 8 ou 9, caractérisé en ce que des courants séparés de fluide sont extraits des régions axiale et périphérique du corps tubulaire (7, 29).

FIG.1

FIG.2

FIG.3

FIG.4

FIG.5

FIG.6